# EUROPÄISCHE PATENTSCHRIFT

(11) **EP 2 884 003 B1**
(45) Veröffentlichungstag und Bekanntmachung des Hinweises auf die Patenterteilung: **31.01.2018**
(21) Anmeldenummer: 14193930.6
(22) Anmeldetag: 19.11.2014
(51) Int. Cl.: E01H 1/04, A01G 1/12

(54) **Reinigungsvorrichtung**
Cleaning device
Dispositif de nettoyage

(30) Priorität: 22.11.2013 DE 202013105324 U
(43) Veröffentlichungstag der Anmeldung: 17.06.2015
(73) Patentinhaber: SMG Sportplatzmaschinenbau GmbH, 89269 Vöhringen (DE)
(72) Erfinder: Owegeser, Johann, 89189 Illerrieden (DE)
(74) Vertreter: Pfister, Stefan Helmut Ulrich

(56) Entgegenhaltungen:
- FR-A1- 2 858 780
- GB-A- 211 304
- US-A- 283 415
- US-A- 998 517
- US-A- 1 448 385
- US-A- 2 712 211
- US-A- 6 092 607

## Beschreibung

Die Erfindung betrifft eine Reinigungsvorrichtung, insbesondere eine handbewegbar fahrbare oder an ein Pflegefahrzeug, wie einen Traktor oder ein Kommunalfahrzeug koppelbare Reinigungsvorrichtung für Flächen, insbesondere für Kunstrasenflächen.
Reinigungsvorrichtungen der besagten Art werden insbesondere zum Abkehren von Verunreinigungsmaterial wie Laub und Müll eingesetzt, der sich z. B. auch auf Kunstrasenflächen von Sportstätten ansammelt. Dabei soll natürlich das Füllmaterial des Kunstrasens nicht selbst abgekehrt werden, um dessen Auflage nicht zu gefährden. Gleichzeitig soll aber auch kein Laub oder Müll liegen bleiben, und zwar auch nicht an schwer zugänglichen Bereichen des Kunstrasens. Die FR 2 858 780 zeigt eine Reinigungsvorrichtung, die mit einer Reinigungsbürste und zwei Walzen, sowie mit einer zwischen der Reinigungsbürste und einer Walze angeordneten Siebeinrichtung zum Aufnehmen von durch die Reinigungsbürste gefördertem Verunreinigungsmaterial ausgestattet ist. Die Erzeugung der Bewegung der Bürste und der Oszillationsbewegung des Siebs erfolgt durch ein Getriebe, welches wiederum über die Zapfwelle eines separaten, nicht zur Vorrichtung gehörenden Zugfahrzeuges angetrieben wird.

Es ist Aufgabe der vorliegenden Erfindung, eine Reinigungsvorrichtung der vorstehend genannten Art bereitzustellen, welche einfach handhabbar ist, und welche zudem eine verbesserte Reinigung von Flächen zulässt.

Diese Aufgabe wird durch eine Reinigungsvorrichtung gemäß Anspruch 1 gelöst. Die Reinigungsvorrichtung ist mit einer Reinigungsbürste und einer Antriebswalze, sowie mit einer zwischen der Reinigungsbürste und der Antriebswalze angeordneten Siebeinrichtung zum Aufnehmen von durch die Reinigungsbürste gefördertem Verunreinigungsmaterial ausgestattet. Die Reinigungsbürste ist über ein Getriebe so mit der Antriebswalze gekoppelt, dass die Reinigungsbürste in Drehung versetzbar ist, wenn die Antriebswalze bei Gebrauch der Reinigungsvorrichtung auf einer zu reinigenden Fläche abrollt. Ein wesentlicher Punkt der Reinigungseinrichtung besteht dabei darin, dass diese keinen Eigenantrieb erfordert, was sie besonders gut handhabbar macht. Darüber hinaus ist die Umdrehungsgeschwindigkeit der Reinigungsbürste an die der Antriebswalze gebunden, so dass auch bei hoher Bewegungsgeschwindigkeit der Reinigungsvorrichtung ein gründliches Abkehren von Verunreinigungsmaterial sichergestellt ist. Die Siebeinrichtung sorgt dabei dafür, dass versehentlich abgekehrtes Material wie das Füllmaterial eines Kunstrasens aus dem geförderten Materialumfang herausgesiebt und wieder auf die zu reinigende Fläche zurückfallen kann. Die Siebeinrichtung ist über wenigstens einen Exzenterzapfen an einer Welle der Reinigungsbürste und/oder Antriebswalze gelagert, so dass die Siebeinrichtung bei Drehung dieser Welle(n) in Schwingung versetzbar ist. Das dadurch hervorgerufene Rütteln des geförderten Verunreinigungsmaterials sorgt insbesondere dafür, dass eventuell vorhandene Klumpenbildungen aufgelöst werden bzw. gar nicht erst zustande kommen, so dass die Siebeinrichtung nicht verstopfen kann.

Unter dem Begriff "Walze" soll dabei im Umfang dieser Anmeldung ein langgestreckter Rotationskörper zu verstehen sein, der auch bürstenartig ausgebildet sein kann, und der sich vorzugsweise über die gesamte Breite der Reinigungsvorrichtung erstreckt.

Bevorzugte Ausführungsformen der Reinigungsvorrichtung sind in den Unteransprüchen angegeben.

In einer ersten vorteilhaften Ausführungsform der Reinigungsvorrichtung ist es danach vorgesehen, dass die Reinigungsbürste in einer Fahrtrichtung der Reinigungsvorrichtung gesehen vor der Antriebswalze angeordnet ist und das Getriebe der Reinigungsbürste eine der Antriebswalze gleichgerichtete Umdrehungsrichtung mitteilt. Dadurch kann insbesondere die nachfolgende Glättung eines gebürsteten Streifens Kunstrasens durch die nacheilende Antriebswalze vorgenommen werden, so dass sich ein insgesamt gründliches und aufgeräumtes Erscheinungsbild des Kunstrasens ergibt. Dabei ist es durch entsprechende Umkehrung der Getriebeübersetzung in einer entgegengesetzten Fahrtrichtung möglich, eine gegenläufige Umdrehungsrichtung von Reinigungsbürste und Antriebswalze herzustellen, so dass die Reinigungsvorrichtung nicht nur gezogen, sondern auch geschoben werden kann, ohne dass dies ihre Funktionalität einschränkt. Insgesamt entsteht dadurch eine besonders gut handhabbare Reinigungsvorrichtung, die auch unter beengten Platzverhältnissen einsetzbar ist.

In einer zweiten vorteilhaften Ausführungsform der Reinigungsvorrichtung ist es vorgesehen, dass die Reinigungsbürste in einer Fahrtrichtung der Reinigungsvorrichtung gesehen hinter der Antriebswalze angeordnet ist und das Getriebe der Reinigungsbürste eine der Antriebswalze entgegengesetzte Umdrehungsrichtung mitteilt. Dadurch kann insbesondere eine Auflockerung oder Ablösung von Verunreinigungsmaterial durch die vorauseilende Antriebswalze vorgenommen werden, so dass sich dessen gründliches und effizientes Abkehren vornehmen lässt. Auch dabei ist es durch entsprechende Umkehrung der Getriebeübersetzung in einer entgegengesetzten Fahrtrichtung möglich, eine gegenläufige Umdrehungsrichtung von Reinigungsbürste und Antriebswalze herzustellen, so dass die Reinigungsvorrichtung nicht nur gezogen, sondern auch geschoben werden kann, ohne dass dies ihre Funktionalität einschränkt. Insgesamt entsteht auch dadurch eine besonders gut handhabbare Reinigungsvorrichtung, die auch unter beengten Platzverhältnissen einsetzbar ist.
In einer weiteren vorteilhaften Ausführungsform der Reinigungsvorrichtung ist es vorgesehen, dass das Getriebe eine Über- oder Untersetzung der Umdrehungsgeschwindigkeit von der Antriebswalze auf die Reinigungsbürste vorsieht. Damit lässt sich insbesondere eine gezielte Abstimmung der Reinigungsbürste auf unterschiedliche Flächen, deren Verschmutzungsgrade und die Fahrgeschwindigkeiten der Reinigungsvorrichtung vornehmen, so dass stets eine effiziente, gründliche und zuverlässig gleichbleibende Reinigungsleistung erzielt wird.
In einer noch weiteren vorteilhaften Ausführungsform der Reinigungsvorrichtung ist es vorgesehen, dass das Getriebe eine Kraftübertragung mittels Gurten und/oder Ketten, insbesondere über wenigstens eine Zwischenwelle hinweg vorsieht. Je nach Wahl des Übertragungsmittels können dabei unterschiedliche Belastungen der Reinigungsbürste abgefangen werden, die je nach Einsatzbereich und Verschmutzungsgrad der zu reinigenden Fläche auftreten können. Über die Zwischenwelle ist dabei eine zuverlässige Kraftübertragung bei zugleich hoher Gestaltungsfreiheit des Getriebes zwischen Antriebswalze und Reinigungsbürste möglich.

In einer noch weiteren vorteilhaften Ausführungsform der Reinigungsvorrichtung ist es vorgesehen, dass die Siebeinrichtung gegenüber der Antriebs- und/oder Reinigungsbürste elastisch gelagert, insbesondere über eine Gummileiste schwingend gelagert ist. Eine derart schwingungsgedämpfte Lagerung verhindert, dass sich das Rütteln der Siebeinrichtung auf ein Chassis der Reinigungsvorrichtung überträgt und eventuell Wartungs- und Reparaturarbeiten auslöst. Gleichzeitig lässt sich durch die Gummileiste auf konstruktiv besonders einfache Art und Weise eine Schwenkachse festlegen.
In einer noch weiteren vorteilhaften Ausführungsform der Reinigungsvorrichtung ist es vorgesehen, dass die Siebeinrichtung ein Festsieb und ein in unterschiedlichen Abständen dazu festlegbares Verstellsieb umfasst. Dadurch lässt sich insbesondere die stufenweise Siebung des geförderten Materials ermöglichen, so dass besonders feines, versehentlich abgekehrtes Material wie das Füllmaterial eines Kunstrasens wieder aus dem gesamten geförderten Material herausgetrennt werden kann. Durch den frei wählbaren Abstand des Verstellsiebs von dem Festsieb wird weiterhin sichergestellt, dass abhängig von einem Verschmutzungsgrad der Fläche ein jeweils ausreichend großer Auffangraum für das gesiebte Material unterhalb oder oberhalb von dem Verstellsieb einstellbar ist, so dass dieses weder von oben noch von unten blockiert werden kann. Bevorzugt ist es dabei, dass das Verstellsieb eine ungefähr 2- bis 3-fach größere Sieblochung aufweist als das Festsieb. Denn bei diesem Lochungsverhältnis wurde eine besonders effiziente und zuverlässige Trennung des Verunreinigungsmaterials von versehentlich abgekehrtem Material wie dem Füllmaterial eines Kunstrasens festgestellt.

In einer noch weiteren vorteilhaften Ausführungsform der Reinigungsvorrichtung ist es vorgesehen, dass ein Stützschlitten zum Abstützen der Reinigungsvorrichtung auf einer zu reinigenden Fläche vorgesehen ist, der zwischen der Reinigungsbürste und der Siebeinrichtung angeordnet ist. Dieser ist in der Lage, die Reinigungsbürste auf einer definierten Höhe gleiten zu lassen, womit eine gleichbleibende Reinigungsgüte gewährleistet ist. Dabei ist es bevorzugt, dass der Stützschlitten ein Ableitblech zum Führen des Verunreinigungsmaterials von der Reinigungsbürste zur Siebeinrichtung aufweist. Dies ermöglicht insbesondere den besonders gezielten und damit gründlichen Abtrag des Verunreinigungsmaterials ohne Verluste. Bevorzugt ist es dabei weiterhin, dass der Stützschlitten gegenüber der Reinigungsbürste und/oder der Antriebswalze vertikal verstellbar gelagert ist, womit sich unterschiedliche Reinigungstiefen und damit - gründlichkeiten vorgeben lassen.

In einer noch weiteren vorteilhaften Ausführungsform der Reinigungsvorrichtung ist es vorgesehen, dass die Antriebswalze als eine profilierte Walze, insbesondere als eine Stachelwalze ausgeführt ist. Damit ist ein potentielles Rutschen auf der Fläche ausgeschlossen und ein zuverlässiger Antrieb der Reinigungswalze sichergestellt. Gleichzeitig kann auch eine Auflockerung und/oder Ablösung von Verunreinigungsmaterial vorgenommen werden, wenn die Antriebswalze der Reinigungsbürste vorauseilt.

In einer noch weiteren vorteilhaften Ausführungsform der Reinigungsvorrichtung ist es vorgesehen, dass die Antriebswalze mindestens 25%, bevorzugt 50% und besonders bevorzugt mindestens 70% der Länge der Reinigungsbürste beträgt. Damit lässt sich insbesondere ein optimales Verhältnis zwischen Antriebs- und Reinigungsleistung der Reinigungsvorrichtung bei gleichzeitig besonders kompakter Bauart vorgeben. Eine besonders hohe Antriebsleistung und kompakte Bauform entsteht dabei insbesondere bei gleicher Länge der Antriebswalze und der Reinigungsbürste.

In einer noch weiteren vorteilhaften Ausführungsform der Reinigungsvorrichtung ist es vorgesehen, dass die Antriebswalze und/oder die Reinigungsbürste jeweils mindestens zwei einzelne Teilwalzen bzw. Teilbürsten umfassen. Diese können dabei auch dergestalt auf einer jeweiligen Antriebs- bzw. Bürstenwelle angeordnet sein, dass diese Wellen auch von individuellen Teilwalzen bzw. -bürsten angetrieben werden können, unabhängig davon, ob andere Teilwalzen bzw. -bürsten der gleichen Welle eventuell auf der Fläche rutschen oder durch Verunreinigungsmaterial blockiert sind. Aus der Summe der Einzellängen aller Teilwalzen bzw. -bürsten ergibt sich die Länge der Antriebswalze bzw. Reinigungsbürste.

In einer noch weiteren vorteilhaften Ausführungsform der Reinigungsvorrichtung ist es vorgesehen, dass die Reinigungsbürste achsparallel zur Antriebswalze angeordnet ist, womit sich eine besonders hohe Reinigungsleistung im Vergleich zu einer schräg verlaufenden Reinigungsbürste wie auch ein einfacher Aufbau der Reinigungsvorrichtung selbst ergibt.

Schließlich ist in einer noch weiteren vorteilhaften Ausführungsform der Reinigungsvorrichtung vorgesehen, dass die Reinigungsbürste im Vergleich zur Antriebswalze mit einem weicheren Oberflächenprofil ausgeführt ist, was für einen rutschfreien Antrieb und ein besseres Durchkämmen der zu reinigenden Fläche sorgt.

Abhängig von der Größe und Art der zu reinigenden Fläche, insbesondere einer Kunstrasenfläche, soll die vorstehende beschriebene Reinigungsvorrichtung dabei als eine handbewegbare oder an ein Pflegefahrzeug, wie einen Traktor oder ein Kommunalfahrzeug koppelbare Reinigungsvorrichtung Verwendung finden.

In den beiliegenden Figuren ist die Erfindung insbesondere in einem Ausführungsbeispiel schematisch dargestellt. Es zeigen:
- Figur 1: eine geschnittene seitliche Ansicht einer handbewegbar fahrbaren Reinigungsvorrichtung in einer Schnittebene;
- Figur 2: eine geschnittene seitliche Ansicht der handbewegbar fahrbaren Reinigungsvorrichtung in einer weiteren Schnittebene;
- Figur 3: eine geschnittene seitliche Ansicht der handbewegbar fahrbaren Reinigungsvorrichtung in einer noch weiteren Schnittebene;
- Figur 4A: eine geschnittene seitliche Ansicht einer Lagerung der Siebeinrichtung bei 1/4 Umdrehung eines Exzenterzapfens;
- Figur 4B: die Ansicht der Figur 4A mit 1/2 Umdrehung des Exzenterzapfens;
- Figur 4C: die Ansicht der Figur 4A mit 3/4 Umdrehung des Exzenterzapfens;

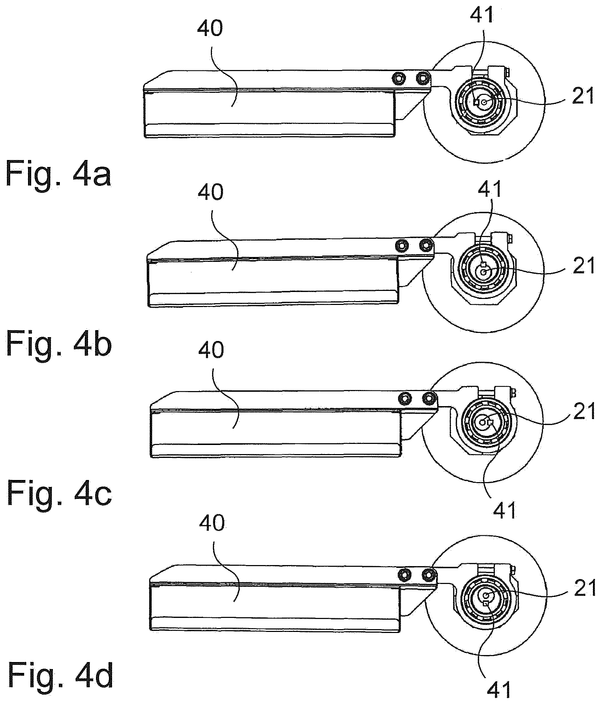

- Figur 4C: die Ansicht der Figur 4A mit einer Umdrehung des Exzenterzapfens;

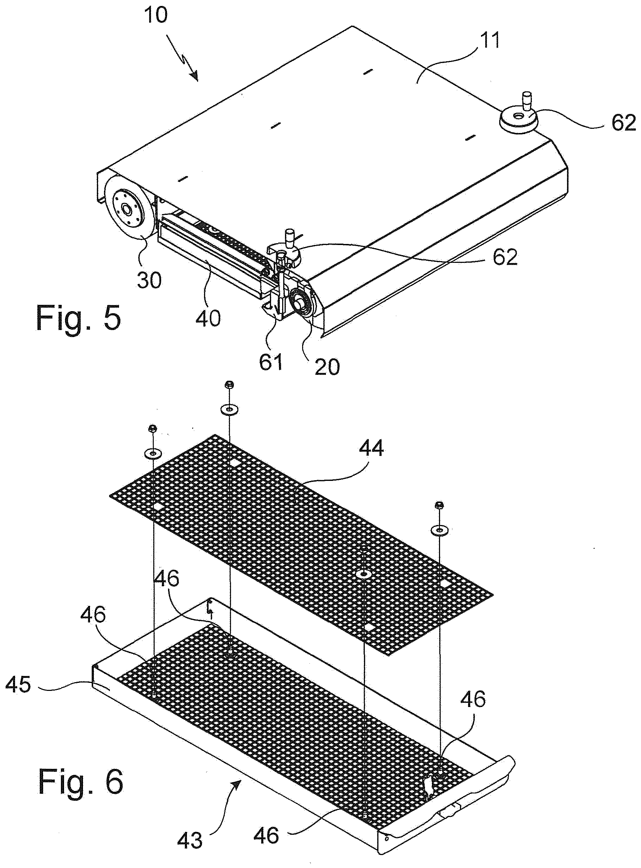

- Figur 5: eine perspektivische Ansicht der handbewegbar fahrbaren Reinigungsvorrichtung von schräg oben;
- Figur 6: eine perspektivische Ansicht einer explosionsartig auseinander gezogenen Siebeinrichtung von schräg oben;

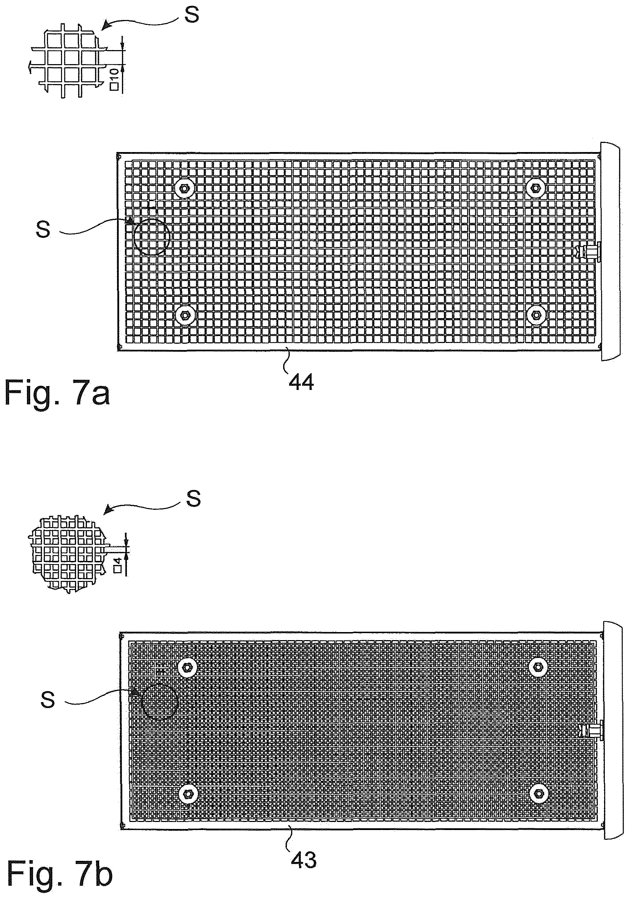

- Figur 7A: das Verstellsieb der Siebeinrichtung der Figur 6, zusammen mit der zugehörigen Sieblochung in Vergrößerung, und
- Figur 7B: das Festsieb der Siebeinrichtung der Figur 6, zusammen mit der zugehörigen Sieblochung in Vergrößerung.

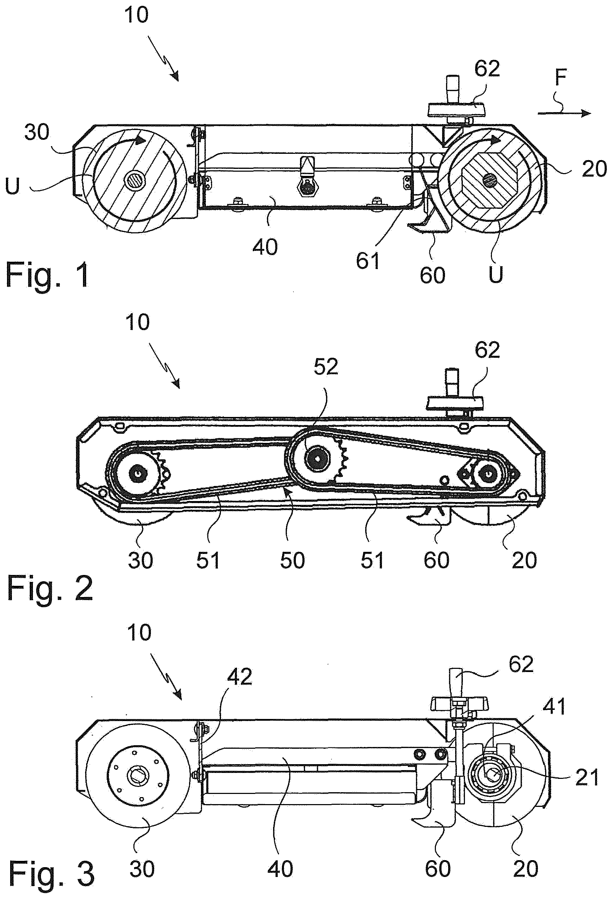

Figur 1 zeigt eine seitliche Ansicht einer handbewegbar fahrbaren Reinigungsvorrichtung 10 in einer Schnittebene, mit einer Reinigungsbürste 20 und einer hier nur beispielhaft achsparallel dazu angeordneten Antriebswalze 30. Zwischen der Reinigungsbürste 20 und der Antriebswalze 30 ist eine Siebeinrichtung 40 zum Aufnehmen von Material angeordnet, das von der Reinigungsbürste 20 gefördert wird. Die Siebeinrichtung 40 ist dabei geeignet, versehentlich gefördertes Material wie das Füllmaterial eines Kunstrasens herauszusieben und auf die Fläche zurückfallen zu lassen. Nur beispielhaft ist die Fahrtrichtung F der Reinigungsvorrichtung 10 hier nach rechts gerichtet, so dass die Umdrehungsrichtung U der Antriebswalze 30 im Uhrzeigersinn verläuft. Die Reinigungsbürste 20 ist dabei über ein (in dieser Schnittebene hier nicht sichtbares) Getriebe so mit der Antriebswalze 30 gekoppelt, dass diese in gleiche Umdrehungsrichtung U versetzbar ist, wenn die Antriebswalze 30 auf einer zu reinigenden Fläche abrollt. Bei einer Bewegung in Fahrtrichtung F rollt die Reinigungsvorrichtung 10 dabei zum einen auf der Antriebswalze 30 ab und gleitet zusätzlich auf einem Stützschlitten 60, wobei ein Leitblech 61 das von der rotierenden Reinigungsbürste 20 geförderte Material gezielt der Siebeinrichtung 40 zuführt. Grundsätzlich sei hier angemerkt, dass auch eine umgekehrte Anordnung der Bürsten 20 und 30 möglich ist, d.h. dass die Antriebswalze 30 sich am in Fahrtrichtung F vorderen Teil der Reinigungsvorrichtung 10 befindet, während die Reinigungsbürste 20 sich am in Fahrtrichtung F hinteren Teil angeordnet ist. Das vorstehend genannte Getriebe kann dabei so ausgelegt sein, dass sich die Reinigungsbürste 20 gegenläufig zur Antriebswalze 30 dreht, d.h. beide Umdrehungsrichtungen voneinander verschieden sind.

In jedem Fall aber kann ein Höhenverstellmechanismus mit einem Handrad 62 zur Höhenverstellung des Stützschlittens 60 und damit zur Regulierung der Eingriffstiefe der Reinigungsbürste 20 in die zu reinigende Fläche vorgesehen sein. Damit lässt sich insbesondere auch eine Einstellung der Reinigungsvorrichtung 10 auf jede beliebige Oberflächenbeschaffenheit der zu reinigenden Fläche und/oder die Art und den Umfang der Verschmutzung wie auch auf die gewünschte Fahrgeschwindigkeit vornehmen. Natürlich lässt sich auch die Reinigungsbürste 20 entsprechend auswechseln und anpassen, wie sich auch die Antriebswalze 30 auf ein rutschfreies Abrollen auf die jeweils zu reinigende Fläche auswechseln und anpassen lässt. In der Siebeinrichtung 40 wird schließlich eine zuverlässige Trennung von Verunreinigungsmaterial und beispielsweise Füllmaterial eines Kunstrasens vorgenommen, wobei letzteres über eine entsprechende Wahl der Sieblochung S wieder nach unten auf die zu reinigende Fläche abgegeben wird, während das Verunreinigungsmaterial zuverlässig in der Siebeinrichtung 40 verbleibt. Die hier beschriebene Reinigungsvorrichtung 10 benötigt dabei keinerlei eigenen Antrieb und kann insbesondere leicht an ein beliebiges Zuggerät angekoppelt und von diesem bewegt werden, womit diese gleichsam besonders leicht handhabbar, wie zuverlässig und effizient ist.

Figur 2 zeigt eine geschnittene seitliche Ansicht der handbewegbar fahrbaren Reinigungsvorrichtung 10 in einer weiteren Schnittebene, aus welcher die Details des bereits genannten Getriebes 50 zu erkennen sind, das hier als Zahnrad- und Kettengetriebe mit Ketten 51 ausgelegt sein soll, welche der Reinigungsbürste 20 die Umdrehung der Antriebswalze 30 über eine Zwischenwelle 52 mitteilen. Denkbar ist hier natürlich auch jede andere geeignete Getriebeverbindung, wie zum Beispiel eine Gurt- oder Gelenkwellenkopplung. Die hier dargestellte Zahnrad- und Kettenlösung stellt dabei eine besonders robuste, zuverlässige und effiziente Kraftübertragung zwischen der Antriebswalze 30 und der Reinigungsbürste 20 zur Verfügung.

Figur 3 zeigt eine geschnittene seitliche Ansicht der handbewegbar fahrbaren Reinigungsvorrichtung 10 in einer noch weiteren Schnittebene. Diese stellt insbesondere die beidseitige Lagerung der Siebeinrichtung 40 dar, deren linke Seite schwingend in oder an einer Gummileiste 42 befestigt und deren rechte Seite über einen Exzenterzapfen 41 mit einer Bürstenwelle 21 der Reinigungsbürste 20 verbunden ist. Die rechtsseitig exzentrische Lagerung der Siebeinrichtung 40 führt dabei mit Rotation der Reinigungsbürste 20 zu einer Rüttelbewegung der Siebeinrichtungen 40, die eine zuverlässige Trennung von Verunreinigungsmaterial und zum Beispiel Füllmaterial eines Kunstrasens befördert. Die Vibration der Siebeinrichtung 40 wird durch deren linksseitige Lagerung in oder an der Gummileiste sowohl ermöglicht als auch wiederum gedämpft, so dass ein Chassis der Reinigungsvorrichtung 10 relativ schwingungsfrei bleibt. Mit der exzentrischen Lagerung der Siebeinrichtung 40 an der Bürstenwelle 21 der Reinigungsbürste 20 ist somit auch für den Siebvorgang kein eigener Antrieb der Reinigungsvorrichtung 10 erforderlich, womit dem Getriebe 50 gleich eine Doppelfunktion, nämlich der Antrieb der Reinigungsbürste 20 und der Siebeinrichtung 40, zukommt. Dadurch wird die Handhabbarkeit, Zuverlässigkeit und Reinigungseffizienz der dargestellten Reinigungsvorrichtung 10 noch einmal deutlich erhöht.

Figuren 4A bis 4D zeigen die rechtsseitige Lagerung der Siebeinrichtung 40 über den Exzenterzapfen 41 an der Bürstenwelle 21 der Reinigungsbürste 20. Figur 4A stellt dabei eine geschnittene Ansicht der Lagerung der Siebeinrichtung 40 bei 1/4 Umdrehung des Exzenterzapfens 41, die Figur 4B die Ansicht der Figur 4A mit einer 1/2 Umdrehung des Exzenterzapfens 41, die Figur 4C die Ansicht der Figur 4A mit einer 3/4 Umdrehung des Exzenterzapfen 41 und schließlich die Figur 4 die Ansicht der Figur 4A mit einer ganzen Umdrehung des Exzenterzapfens 41 dar. Durch entsprechende Wahl der Exzentrizität kann dabei die Rüttelbewegung der Siebeinrichtung 40 stärker oder schwächer gewählt werden, je nach Art und Umfang der Verunreinigung der zu reinigenden Fläche. Die Einstellung des Exzenterzapfens 41 kann dabei zum Beispiel direkt an der Bürstenwelle 21 der Reinigungsbürste 20 vorgenommen werden.

Figur 5 zeigt eine perspektivische Ansicht der handbewegbar fahrbaren Reinigungsvorrichtung 10 von schräg oben, mit einer Abdeckung 11, die lediglich beidseitig der Reinigungsbürste 20 überstehende Handräder 62 einer Höhenverstellereinrichtung für die Reinigungsbürste 20 freigibt, die auf der Unterseite mit dem Stützschlitten 60 gekoppelt sind. Die Abdeckung 11 übergreift dabei sowohl die Antriebswalze 30, als auch die Siebeinrichtung 40 wie die Reinigungsbürste 20, so dass insgesamt eine kompakte Bauform der Reinigungsvorrichtung 10 entsteht, welche deren Handhabbarkeit und insbesondere Zuverlässigkeit auch unter widrigen Witterungsbedingungen deutlich erhöht.

Figur 6 zeigt eine perspektivische Ansicht einer explosionsartig auseinandergezogenen Siebeinrichtung 40 von schräg oben. Die Siebeinrichtung 40 umfasst dabei ein Festsieb 43, dass hier in einer Siebhalterung 45 aufgenommen ist, und ein davon über eine Schrauben- und Hülsenkonstruktion 46 beabstandbares, darüber liegendes Verstellsieb 44. Durch das zweifache Sieben des gesamten Materialeintrags kann dabei eine besonders feine Trennung von Verunreinigungsmaterial und zum Beispiel Füllmaterial eines Kunstrasens vorgenommen werden, welches schließlich dem Kunstrasen wieder zugeführt wird. Je nach der Menge und Granularität des Materialeintrags kann dabei auch der Abstand zwischen dem Verstellsieb 44 und dem Festsieb 43 so gewählt werden, dass eine Verstopfung des einen und/oder anderen Siebes 43, 44 sicher ausgeschlossen ist. Die Siebhalterung 45 kann dabei so ausgelegt sein, dass diese in Art einer Schublade aus dem Chassis der Reinigungsvorrichtung 10 herausgezogen und das Verunreinigungsmaterial entleert werden kann.

Figuren 7A und 7B zeigen Details des Festsiebs 43 und des Verstellsiebs 44. Figur 7A zeigt dabei das Verstellsieb 43 der Siebeinrichtung 40 der Figur 6, zusammen mit der zugehörigen Sieblochung S in Vergrößerung, die hier 4 mm betragen soll. Figur 7B zeigt das Verstellsieb 44 der Figur 6, zusammen mit der zugehörigen Sieblochung S in Vergrößerung, die größer als die des Festsiebs 43 gewählt ist, nämlich hier 10 mm. Die ungefähr zwei bis dreifach größere Sieblochung S sorgt dabei für eine besonders effiziente Trennung unterschiedlicher Partikelgrößen des Materialeintrags in die Siebeinrichtung 40.

## Patentansprüche

1. Reinigungsvorrichtung (10), insbesondere handbewegbar fahrbare oder an ein Pflegefahrzeug, wie einen Traktor, Mähtraktor oder Kommunalfahrzeug koppelbare Reinigungsvorrichtung (10) für Flächen, insbesondere für Kunstrasenflächen, mit einer Reinigungsbürste (20) und einer Walze (30), sowie mit einer zwischen der Reinigungsbürste (20) und der Walze (30) angeordneten Siebeinrichtung (40) zum Aufnehmen von durch die Reinigungsbürste (20) gefördertem Verunreinigungsmaterial, **dadurch gekennzeichnet, dass** die Walze (30) eine Antriebswalze (30) ist und die Reinigungsbürste (20) über ein Getriebe (50) so mit der Antriebswalze (30) gekoppelt ist, dass die Reinigungsbürste (20) in Drehung versetzbar ist, wenn die Antriebswalze (30) bei Gebrauch der Reinigungsvorrichtung (10) auf einer zu reinigenden Fläche abrollt, wobei die Siebeinrichtung (40) über wenigstens einen Exzenterzapfen (41) an einer Welle (21) der Reinigungsbürste (20) und/oder Antriebswalze (30) gelagert ist, so dass die Siebeinrichtung (40) bei Drehung dieser Welle(n) (21) in Schwingung versetzbar ist.

2. Reinigungsvorrichtung (10) nach Anspruch 1, **dadurch gekennzeichnet, dass** die Reinigungsbürste (20) in einer Fahrtrichtung (F) der Reinigungsvorrichtung (10) gesehen vor der Antriebswalze (30) angeordnet ist und das Getriebe (50) der Reinigungsbürste (20) eine der Antriebswalze (30) gleichgerichtete Umdrehungsrichtung (U) mitteilt oder die Reinigungsbürste (20) in einer Fahrtrichtung (F) der Reinigungsvorrichtung (10) gesehen hinter der Antriebswalze (30) angeordnet ist und das Getriebe (50) der Reinigungsbürste (20) eine der Antriebswalze (30) entgegengesetzte Umdrehungsrichtung (U) mitteilt.

3. Reinigungsvorrichtung (10) nach Anspruch 1 oder 2, **dadurch gekennzeichnet, dass** das Getriebe (50) eine Über- oder Untersetzung der Umdrehungsgeschwindigkeit von der Antriebswalze (30) auf die Reinigungsbürste (20) vorsieht, wobei das Getriebe (50) bevorzugt eine Kraftübertragung mittels Gurten und/oder Ketten (51), insbesondere über wenigstens eine Zwischenwelle (52) hinweg vorsieht.

4. Reinigungsvorrichtung (10) nach einem der vorstehenden Ansprüche, **dadurch gekennzeichnet, dass** die Siebeinrichtung (40) gegenüber der Antriebs- und/oder Reinigungsbürste (20) elastisch gelagert, insbesondere über eine Gummileiste (42) schwingend gelagert ist.

5. Reinigungsvorrichtung (10) nach einem der vorstehenden Ansprüche, **dadurch gekennzeichnet, dass** die Siebeinrichtung (40) ein Festsieb (43) und ein in unterschiedlichen Abständen dazu festlegbares Verstellsieb (44) umfasst.

6. Reinigungsvorrichtung (10) nach Anspruch 5, **dadurch gekennzeichnet, dass** das Verstellsieb (44) eine ungefähr 2-bis 3-fach größere Sieblochung (S) aufweist als das Festsieb (43).

7. Reinigungsvorrichtung (10) nach einem der vorstehenden Ansprüche, **dadurch gekennzeichnet, dass** ein Stützschlitten (60) zum Abstützen der Reinigungsvorrichtung (10) auf einer zu reinigenden Fläche vorgesehen ist, der zwischen der Reinigungsbürste (20) und der Siebeinrichtung (40) angeordnet ist.

8. Reinigungsvorrichtung (10) nach Anspruch 7, **dadurch gekennzeichnet, dass** der Stützschlitten (60) ein Ableitblech (61) zum Führen des Verunreinigungsmaterials von der Reinigungsbürste (20) zur Siebeinrichtung (40) aufweist.

9. Reinigungsvorrichtung (10) nach Anspruch 7 oder 8, **dadurch gekennzeichnet, dass** der Stützschlitten (60) gegenüber der Reinigungsbürste (20) und/oder der Antriebswalze (30) vertikal verstellbar gelagert ist.

10. Reinigungsvorrichtung (10) nach einem der vorstehenden Ansprüche, **dadurch gekennzeichnet, dass** die Antriebswalze (30) als eine profilierte Walze, insbesondere als eine Stachelwalze ausgeführt ist.

11. Reinigungsvorrichtung (10) nach einem der vorstehenden Ansprüche, **dadurch gekennzeichnet, dass** die Antriebswalze (30) mindestens 25%, bevorzugt 50% und besonders bevorzugt mindestens 70% der Länge der Reinigungsbürste (20) beträgt.

12. Reinigungsvorrichtung (10) nach einem der vorstehenden Ansprüche, **dadurch gekennzeichnet, dass** die Antriebswalze (30) und/oder die Reinigungsbürste (20) mindestens zwei einzelne Teilwalzen bzw. Teilbürsten umfasst.

13. Reinigungsvorrichtung (10) nach einem der vorstehenden Ansprüche, **dadurch gekennzeichnet, dass** die Reinigungsbürste (20) achsparallel zur Antriebswalze (30) angeordnet ist.

14. Reinigungsvorrichtung (10) nach einem der vorstehenden Ansprüche, **dadurch gekennzeichnet, dass** die Reinigungsbürste (20) im Vergleich zur Antriebswalze (30) mit einem weicherem Oberflächenprofil ausgeführt ist.

## Claims

1. Cleaning device (10), in particular cleaning device (10) that is traveling by manual movement or can be coupled to a maintenance vehicle, such as a tractor, tractor mower or municipal vehicle, for surfaces, in particular artificial turfs, with a cleaning brush (20) and a roller (30), as well as a sieve device (40) arranged between the cleaning brush (20) and the roller (30) for picking up contaminating material conveyed by the cleaning brush (20), **characterized in that** the roller (30) is a drive roller (30), and the cleaning brush (20) is coupled via a gear (50) to the drive roller (30) such that the cleaning brush (20) can be set in rotation when the drive roller (30) rolls on a surface to be cleaned during the use of the cleaning device (10), wherein the sieve device (40) is mounted on a shaft (21) of the cleaning brush (20) via at least one eccentric pin (41), so that the sieve device (40) is set in vibration when this shaft (s) (21) turn(s).

2. Cleaning device (10) according to claim 1, **characterized in that** the cleaning brush (20) is arranged in front of the drive roller (30), seen in a traveling direction (F) of the cleaning device (10), and the gear (50) communicates to the cleaning brush (20) a rotation direction (U) in the same direction of the one of the drive roller (30), or the cleaning brush (20) is arranged behind the drive roller (30), seen in a traveling direction (F) of the cleaning device (10), and the gear (50) communicates to the cleaning brush (20) a rotation direction (U) that is in opposite direction of the drive roller (30).

3. Cleaning device (10) according to claim 1 or 2, **characterized in that** the gear (50) provides a reduction and speed ratio of the rotational speed from the drive roller (30) to the cleaning brush (20), wherein the gear (50) preferably provides a power transmission by means of belts and/or chains (51), in particular via at least one intermediate shaft (52).

4. Cleaning device (10) according to one of the preceding claims, **characterized in that** the sieve device (40) is flexibly mounted relatively to the drive and/or cleaning brush (20), in particular mounted vibrating via a rubber strip (42).

5. Cleaning device (10) according to one of the preceding claims, **characterized in that** the sieve device (40) comprises a stationary sieve (43) and an adjustable sieve (44) that can be fixed at different distances thereto.

6. Cleaning device (10) according to claim 5, **characterized in that** the sieve perforation (S) of the adjustable sieve (44) is roughly 2 to 3 times larger than the one of the stationary sieve (43).

7. Cleaning device (10) according to one of the preceding claims, **characterized in that** a support slide (60) for supporting the cleaning device (10) on a surface to be cleaned is provided, the slide being arranged between the cleaning brush (20) and the sieve device (40).

8. Cleaning device (10) according to claim 7, **characterized in that** the support slide (60) has a discharge plate (61) for guiding the contaminating material from the cleaning brush (20) to the sieve device (40).

9. Cleaning device (10) according to claim 7 or 8, **characterized in that** the support slide (60) is mounted vertically adjustably relatively to the cleaning brush (20) and/or the drive roller (30).

10. Cleaning device (10) according to one of the preceding claims, **characterized in that** the drive roller (30) is configured as a profiled roller, in particular a spiked roller.

11. Cleaning device (10) according to one of the preceding claims, **characterized in that** the drive roller (30) is at least 25%, preferably 50%, and in particular preferred at least 70% of the length of the cleaning brush (20).

12. Cleaning device (10) according to one of the preceding claims, **characterized in that** the drive roller (30) and/or the cleaning brush (20) comprises at least two separate part rollers or part brushes.

13. Cleaning device (10) according to one of the preceding claims, **characterized in that** the cleaning brush (20) is arranged axially parallel to the drive roller (30).

14. Cleaning device (10) according to one of the preceding claims, **characterized in that** the surface profile of the cleaning brush (20) is softer than the one of the drive roller (30).

## Revendications

1. Dispositif de nettoyage (10), en particulier un dispositif de nettoyage (10) mobile, pouvant être déplacé à la main ou pouvant être accouplé à un véhicule professionnel tel un tracteur, un tracteur tondeur ou un véhicule de la commune, destiné à des terrains, en particulier pour des terrains en gazon synthétique, comportant un brosse de nettoyage (20) et un rouleau (30) ainsi qu'un dispositif de crible (40) situé entre la brosse de nettoyage (20) et le rouleau (30) et recevant les particules de salissures envoyées par la brosse de nettoyage (20), **caractérisé en ce que** le rouleau (30) est un rouleau d'entrainement et **en ce que** la brosse de nettoyage (20) est couplée via un engrenage (50) au rouleau d'entrainement (30) de façon à ce que la brosse de nettoyage (20) peut être mise en mouvement de rotation lorsque le rouleau d'entrainement (30) roule sur le terrain à nettoyer lors de l'utilisation du dispositif de nettoyage (10) de façon à ce que le dispositif de crible (40) est articulé par au moins une tige excentrique (41) au niveau d'un arbre (21) de la brosse de nettoyage (20) et/ou du rouleau d'entraînement (30) afin de produire un mouvement d'oscillation du dispositif de crible (40) par la rotation du (des) arbre(s) (21).

2. Dispositif de nettoyage (10) selon la revendication 1, **caractérisé en ce que** la brosse de nettoyage (20) est située avant le rouleau d'entrainement (30) selon la direction d'avancement (F) du dispositif de nettoyage (10) et l'engrenage (50) transmet à la brosse de nettoyage (20) une direction de rotation (U) identique à celle du rouleau d'entrainement (30) ou **en ce que** la brosse de nettoyage (20) est située derrière le rouleau d'entrainement (30) selon la direction d'avancement (F) du dispositif de nettoyage (10) et l'engrenage (50) transmet à la brosse de nettoyage (20) une direction de rotation (U) opposée à celle du rouleau d'entrainement (30).

3. Dispositif de nettoyage (10) selon la revendication 1 ou 2, **caractérisé en ce que** l'engrenage (50) prévoit une multiplication ou une démultiplication de la vitesse de rotation de celle du rouleau d'entrainement (30) vers celle de la brosse de nettoyage (20) avec un engrenage (50) basé de préférence sur une transmission de forces à l'aide de courroies et/ou de chaînes (51), en particulier à l'aide d'une axe intermédiaire (52).

4. Dispositif de nettoyage (10) selon une des revendications précédentes, **caractérisé en ce que** le dispositif de crible (40) est maintenu de façon élastique, en particulier oscillante, par une languette en caoutchouc (42), par rapport à la brosse d'entrainement et/ou de nettoyage (20).

5. Dispositif de nettoyage (10) selon une des revendications précédentes, **caractérisé en ce que** le dispositif de crible (40) comprend un crible fixe (43) et un crible ajustable (44) pouvant être positionné à des distances différentes par rapport au premier.

6. Dispositif de nettoyage (10) selon la revendication 5, **caractérisé en ce que** le crible ajustable (44) possède une dimension des trous de crible (S) environ 2 à 3 fois supérieure à celle du crible fixe.

7. Dispositif de nettoyage (10) selon une des revendications précédentes, **caractérisé en ce qu'**un coulisseau de support (60) est prévu entre la brosse de nettoyage (20) et le dispositif de crible (40) afin de supporter le dispositif de nettoyage (10) sur un terrain à nettoyer.

8. Dispositif de nettoyage (10) selon la revendication 7, **caractérisé en ce que** le coulisseau (60) possède une tôle de guidage (61) destinée à guider les particules de salissure venant de la brosse de nettoyage (20) vers le dispositif de crible (40).

9. Dispositif de nettoyage (10) selon la revendication 7 ou 8, **caractérisé en ce que** le coulisseau de support (60) est maintenu de façon à pouvoir modifier sa position verticale par rapport à la brosse de nettoyage (20) et/ou du rouleau d'entrainement (30).

10. Dispositif de nettoyage (10) selon une des revendications précédentes, **caractérisé en ce que** le rouleau d'entrainement est un rouleau à surface profilée, en particulier un rouleau à pointes.

11. Dispositif de nettoyage (10) selon une des revendications précédentes, **caractérisé en ce que** le rouleau d'entrainement (30) possède une longueur d'au moins 25%, voire de préférence 50% et idéalement d'au moins 70% de la longueur de la brosse de nettoyage (20).

12. Dispositif de nettoyage (10) selon une des revendications précédentes, **caractérisé en ce que** le rouleau d'entrainement et/ou la brosse de nettoyage (20) comprend (comprennent) au moins deux rouleaux ou brosses partiel(le)s individuel(le)s.

13. Dispositif de nettoyage (10) selon une des revendications précédentes, **caractérisé en ce que** l'axe de la brosse de nettoyage (20) est parallèle à celui du rouleau d'entrainement (30).

14. Dispositif de nettoyage (10) selon une des revendications précédentes, **caractérisé en ce que** la brosse de nettoyage (20) possède un profil de surface moins dur que celui du rouleau d'entrainement (30).
